(19) Europäisches Patentamt / European Patent Office / Office européen des brevets

(11) **EP 2 570 314 B1**

(12) **EUROPEAN PATENT SPECIFICATION**

(45) Date of publication and mention
of the grant of the patent:
**25.12.2013 Bulletin 2013/52**

(51) Int Cl.:
**B60T 8/17** (2006.01)  **B60T 13/26** (2006.01)

(21) Application number: **11181695.5**

(22) Date of filing: **16.09.2011**

(54) **Brake system for a tractor**

Bremsensystem für einen Traktor

Système de freinage pour un tracteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2013 Bulletin 2013/12**

(73) Proprietor: **Haldex Brake Products Aktiebolag**
**261 24 Landskrona (SE)**

(72) Inventors:
 • **Nilsson, Anders**
  **SE-261 45 Landskrona (SE)**
 • **Svendenius, Jacob**
  **SE-226 48 Lund (SE)**
 • **Nockhammar, Ola**
  **SE-237 35 Bjärred (SE)**
 • **Seglö, Fredrik**
  **SE-260 40 Viken (SE)**

(74) Representative: **Rehberg Hüppe + Partner**
**Patentanwälte**
**Nikolausberger Weg 62**
**37073 Göttingen (DE)**

(56) References cited:
**EP-A2- 0 973 009    WO-A1-91/09758**
**WO-A1-92/21541**

## Description

The present invention relates to a brake system for a tractor having solely electro-mechanical brake actuators that might be coupled to a trailer having a pneumatic brake system. Here, the tractor might be any commercial vehicle, a heavy road vehicle or any truck, whereas the trailer might be any trailer or semi-trailer.

## PRIOR ART

In a hypothetical optimal brake actuation of a combination of a towing vehicle, truck or tractor (in the following "tractor") and a trailer the tractor and the trailer are braked with brake forces resulting in the same brake accelerations of the tractor and the trailer with a zero coupling force between the tractor and the trailer. For other control strategies the coupling force between tractor and trailer is controlled to a given pulling force for the trailer, e.g. for stabilizing the steering dynamics and drive stability of the trailer. Many methods for controlling the coupling force between the tractor and the trailer are based on estimating and controlling the trailer braking by comparing the expected retardation with the actual retardation. The longitudinal force equilibrium equation relates the forces at the tractor and the trailer with the vehicle combination acceleration. Forces to be considered in the longitudinal force equilibrium equation are for instance the rolling resistance, the air drag, a downhill force, the driving and braking forces on the wheels from the brakes and/or the drive train. Here, the braking force of the tractor wheels are generally fairly well known as a function of the pedal demand. The rolling resistance and the air drag can be estimated on the basis of the driving velocity whereas the road gradient to be considered for a downhill force might be determined from a sensor or might be neglected if an algorithm for determining the coupling force and for an adaptation of the applied brake forces is run for a longer period. The difference between the expected and the actual retardation will then be a measure on how the trailer brakes perform and the trailer brake characteristics can be estimated. The brake application at the trailer can then be adjusted so that the braking of the  vehicle combination is optimized. A consequence of violating this rule might be a reduction of the maximum of the brake deceleration of the vehicle combination when fully applying the brakes and/or an uneven wear distribution or brake force distribution at the tractor and the trailer. The following applies both to a vehicle combination comprising a semi-trailer or a trailer which unlike a semi-trailer completely supports its own load. Furthermore, the following also applies to a vehicle combination comprising more than one trailer.

EP 0 973 009 A2 discloses a tractor/trailer with a connecting device between the tractor and the trailer for measuring parameters of the tractor/trailer. The system has detection facilities for determining a measurement variable of the forward vehicle or for determining a measurement variable of the trailer, which is interposed in the connecting system between the tractor and the trailer.

EP 0 433 362 B1 relates to a vehicle combination built with a haulage truck and a semi-trailer both equipped with pneumatic brake systems, wherein the pneumatic brake actuation of the semi-trailer is controlled by a control valve located at the haulage truck. The truck and the semi-trailer are linked by coupling pieces for an operating pressure line and a supply line. The control valve for the semi-trailer is designed to emit, depending on the operating pneumatic pressure for the brake actuation of the truck an operating pressure for the semi-trailer which operating pressure can be higher than, lower than or equal to the operating pressure of the truck. The document suggests an additional electronical control unit which is connected to a number of sensors detecting different vehicle parameters, in particular an electrical pressure sensor in the operating pressure line and a deceleration sensor which during a time sequence detects the speed of rotation of at least one of the wheels or a deceleration sensor made up of a pendulum sensor and an additional sensor detecting the load on a rear axle of the truck. The control unit comprises a memory unit wherein various predetermined values are programmed in for the expected deceleration of the vehicle as a function the brake pressure of the truck and the axle load of the rear wheels of the truck. From the output signals of the sensors the control unit emits as a function thereof an output signal representing an expected deceleration under the actual conditions. This output signal is supplied to a comparative circuit to which there is also supplied a signal from the deceleration sensor detecting the actual deceleration. The comparative circuit compares these signals and emits an output signal representing the discrepancy. According to this discrepancy, a control member, in particular an electrical stepping motor modifies the operating pressure which is emitted to the operating pressure line of the semi-trailer. Any adjustment of brake pressures or brake characteristics does not take place until the braking sequence is complete. According to this document, the adaptation process of the applied brake pressures at the tractor and the trailer is intended primarily to take place when the brake pressure is less than a predetermined pressure which is much smaller than the maximum of the brake pressure whereas in case of braking with higher brake pressures no adjustment takes  place. Further parameters considered by the adaptation process might be a sensed motor speed, the operation of a retarder, the activation of an automatic brake control system (ABS).

EP 0 697 314 B1 also compares the desired vehicle combination deceleration with the actual measured vehicle deceleration. When detecting discrepancies in a first step, the pneumatic brake actuations of the tractor and the trailer are both modified to the same extent. However, the change of the brake application in this step is limited to a range dependent on a determined load of the tractor and the trailer. In case of exceeding this threshold during the adaptation process, another adaptation strategy is chosen: This is taken as an indicator that the relation between the brake forces at the tractor and the trailer is to be changed. In steps of 0.05 Bar to 0.2 Bar the brake force at the trailer is automatically adapted.

DE 196 48 936 B4 relates to an electrically controlled pneumatic brake system for a tractor and trailer combination, wherein the pneumatic brake pressure at the trailer is controlled on the basis of the force equilibrium equation of the vehicle combination from a plurality of sets of measurements.

Also DE 197 39 825 B4 relates to an electro-pneumatical brake system. Here, the brake force distribution at the tractor and the trailer is modified on the basis of a correction factor which is a plurality of times determined throughout one single brake actuation. At the beginning of a brake action the correction factor is estimated after a short time interval whereas for ongoing brake action the correction factor is determined with a longer time interval. Also for a plurality of subsequent single brake actuations the determination of the correction factors might be done with increasing time intervals.

There are many uncertainties and error sources when deriving the force equilibrium on the vehicle. The weight of the vehicle must be known, which most often can be quite accurately derived from the air pressure measurement in a vehicle air suspension. However, this is not available for all trailers. The forces on the vehicle must also be estimated and as mentioned the tractor brake properties must be known. In modern EBS-systems the pressure in the brake cylinders that creates the force in the brake is measured. From this pressure the brake torque on the wheels is predicted. This enforces an assumption on the pad disk friction and a brake working with the predetermined characteristics. However, the brake characteristic of the brake pad material varies during its lifetime. The brake characteristic might heavily change with a changing temperature in the brake. In case that the tractor brakes are not doing as they are assumed to do, the vehicle will not get the retardation as it is supposed to have. The adaptation processes of the prior art as described above basing on the force equilibrium will incorrectly make the trailer to compensate for this by adapting the trailer brake application instead of adapting the tractor brake application.

Further prior art relates to an increase of the modelling and/or monitoring of the tractor brake forces. EP 0 961 722 B1 discloses to identify the brake properties solely for one part of the vehicle combination, so only for the tractor or only for the trailer and then using the identified brake properties for identifying the brake properties of the other part when both braking the tractor and the trailer. Here, the brake parameters are also determined from a deceleration signal. The automatic brake distribution change to a brake actuation only of one single part of the vehicle combination only takes place for selected brake applications where the braking demand is within a pre-set low band and wherein the vehicle is not subject to any substantial steering input and the speed of the commencement of braking is above a pre-set threshold yet below an upper limit set by safety considerations. It is also suggested to inhibit the automatic change to a braking action solely of one part of the vehicle combination in case of detecting an ABS operation. Also a learning process might be used considering passed identifications and adaptations wherein the learning process might be reset in case of detecting that a trailer coupled to the tractor is changed. Also according to EP 0 563 596 B1 a brake factor for each brake, a vehicle axle or a part of a vehicle combination is separately determined by automatically changing the brake force distribution for a time sub-interval of the overall brake action time interval.

US 6,139,118 discloses the assessment of the force in the coupling between the tractor and the trailer on the basis of forces measured in the suspension components of at least two axles of the tractor and the changes of such forces occurring during the brake actuation.

The documents EP 0 883 538 B1 and EP 1 022 204 A2 disclose trailer control units used for electronically controlling a pneumatical pressure at an interface between the tractor and the trailer wherein both the tractor and the trailer comprise pneumatical brake systems. The documents DE 10 2008 031 327 A1 and DE 10 2008 003 380 A1 disclose a hybrid brake system for a tractor wherein one axle of the tractor comprises electro-mechanical brake actuators whereas another axle of the tractor comprises pneumatic brake actuators.

## OBJECT OF THE INVENTION

It is the object of the present invention to provide a brake system for a tractor that solely comprises electro-mechanical brake actuators but no pneumatical brake actuators and is suitable for being coupled to a trailer. In particular, it is an object of the present invention to provide a brake system with enhanced options for controlling the brake force distribution between a tractor and a trailer.

## SOLUTION

According to the invention, the object of the invention is solved by the features of independent claim 1. Further embodiments of the invention are given by brake systems with the features of dependent claims 2 to 16.

## DESCRIPTION OF THE INVENTION

The inventive brake system of a tractor comprises solely electro-mechanical brake actuators, so no pneumatical or electro-pneumatical brake actuators. This relates in particular to the service brake so that the tractor during service brake operation is only braked by the electro-mechanical brake actuators. Whereas it is also possible that a parking brake of the tractor is a pneumatical or electro-pneumatical parking brake actuator or any other known type of parking brake actuator, the present invention also covers an embodiment wherein the parking brake is also an electro-mechanical parking brake actuator.

The inventive use of electro-mechanical brake actuators provides the integration of these upcoming brake actuators into the brake system leading to improved brake strategies, in particular related with improved brake stability dynamics and shorter braking distances of the vehicle. The present invention distinguishes over brake systems wherein the brake system is built by a "hybrid system" consisting both of a circuit with electro-mechanical brake actuators and a circuit with electro-pneumatical brake actuators for providing a redundancy of the brake system of the tractor. However, the present invention covers embodiments wherein the brake system is built with a plurality of circuits, each circuit being equipped with electro-mechanical brake actuators.

Whereas for the purely electro-mechanical brake actuators of the inventive brake system the brake system does not require any pneumatics, the invention suggests equipping the brake system of the tractor with a pneumatic brake circuit that might be used for a pneumatic trailer brake system that is optionally coupled with the brake system of the tractor. According to the invention, it is possible to combine a "modern tractor" with a brake system having electro-mechanical brake actuators with a traditional trailer comprising a pneumatic brake system. The brake system comprises an interface, in particular couplings or glad hands, for pneumatically connecting the pneumatic brake system for the trailer with the tractor, e.g. an appropriate counter interface (couplings, glad hands) of the trailer. Whereas it is possible that the interface is only a pneumatic interface, e.g. with a supply line and a brake control line, the present invention covers also embodiments where there is a pneumatic interface for coupling the tractor with a trailer with a pneumatic trailer brake system and an additional electrical interface for alternatively coupling the same tractor with a trailer comprising an electronic trailer brake system. The two aforementioned interfaces might be separate interfaces or integrated into one single multifunctional interface.

Furthermore, in the inventive brake system of the tractor a trailer control unit (in the following "TCU") is provided. The TCU is responsible for controlling at least one pneumatical pressure at the interface. The pneumatical pressure is controlled in dependence on the actuation of the electro-mechanical brake actuation. Here, the considered actuation might be any suitable signal sensed by a sensor or an operating parameter of the electro-mechanical brake actuation correlating in the widest possible sense with the actuation of the electro-mechanical brake. Examples for the actuation considered in the TCU are a electrical control signal of the electro-mechanical brake actuator, a measured friction and/or clamping force of the electro-mechanical brake actuator, a deceleration signal of the tractor, a level change of a suspension system caused by a brake actuation and the like.

The present invention covers embodiments wherein there is only one single pneumatic circuit used for a pneumatic trailer brake system. However, the invention also covers embodiments where the pneumatic circuit is both responsible for providing compressed air to a pneumatic trailer brake system and for at least one additional consumer (which is no brake system of the tractor), e.g. an air suspension circuit or circuits related to auxiliary consumers. Furthermore, the present invention covers embodiments wherein besides the pneumatic circuit for the pneumatic trailer brake system there are additional separate pneumatic circuits.

The TCU might be located at any place at the tractor and the brake system of the tractor. For one embodiment of the inventive brake system the TCU is integrated into an air processing unit (in the following "APU"). This integration might be done by building separate components of the APU and combining these components to one assembly unit. It is also possible that the TCU and the other components of the APUs have a modular design such that according to the needs of a specific tractor it is possible to combine different modules to build an APU with individualized design for this tractor. The APU fulfils a plurality of functions with the integration of the related components into the APU, e.g.

- drying of the compressed air via an air drying unit with air drying cartridge,
- automatic monitoring and control of regeneration cycles and load cycles for the air dryer cartridge,
- distribution of pressurized air to a plurality of pneumatic circuits,
- controlling the sequence of filling reservoirs of a plurality of circuits,
- protecting single circuits against pressure losses,
- providing the option of supplying circuits from other circuits or reservoirs related with other circuits,
- providing integrated multi protection pressure valves and the like.

The integration of the TCU into the APU provides a very compact design and eases the assembly process due to the fact that it is no longer necessary to separately assemble both the TCU and the APU and connect these separate units by additional lines. Furthermore, according to one embodiment of the invention the pressure control unit might be controlled by an electric CPU which is solely responsible for controlling the TCU or is a multifunctional TCU controlling both the supply of pressurized air to the interface and other functions of the APU, e.g. the load and regeneration cycles, opening and closing states of valves as the multi protection pressure valve or the pneumatical conditions in the circuits connected or built with the APU.

In its simplest embodiment the TCU comprises at least one valve which is directly controlled by an internal or external CPU or pilot-controlled by a solenoid valve that is controlled by an internal or external CPU.

In another aspect of the invention the TCU and/or the APU is/are electrically connected with a brake control unit (in the following also "BCU") which controls at least one of the electro-mechanical brake actuators. Via the electrical connection between the BCU and the TCU and/or the APU it is possible to transfer an electrical signal correlating with the brake actuation of the electro-mechanical brake actuator(s) to the TCU and/or the APU. However, it is also possible to transfer signals in the other direction, so from the TCU and/or the APU to the BCU. The signals transferred by the electrical connection might be related to system parameters or operating parameters.

The aforementioned electrical connection might be of any known type with any number of electrical lines. It is also possible that via one single line a plurality of signals or data passages is transferred between TCU and/or APU and BCU. Furthermore, it is possible that there is not only one single BCU but there are two BCUs. In the case of using two BCUs the TCU and/or APU might be connected with a first BCU and connected with the second BCU via the first BCU and/or might be directly connected with both BCUs. For one embodiment of the invention the TCU and/or the APU is/are connected with the BCU via a data bus. Such data bus might be used for a plurality of functions within the tractor and might be used for a communication between the TCU and/or the APU and the BCU only in one direction or in both directions. To mention only some examples a signal transferred via the electrical connection or the data bus might be a brake command signal for the brake actuation of the trailer determined in the BCU and transferred to the TCU. Other options might be an emergency signal determined in the BCU and transferred to the TCU for causing an automatic brake actuation for an emergency brake action with an emergency brake force at least partially supplied by the pneumatic brake system of the trailer. The transferred signal might also correlate with an energy level status of the electro-mechanical brake system and the batteries included into this system. It is possible that for a detected low energy level the TCU changes the pneumatic pressures at the interface to the trailer. Another example for a signal transferred via the mentioned electrical connection or the data bus is a pressure level status, e.g. the actual pressure at the interface which is transferred to the BCU for consideration for the control signal for the actuation of the electro-mechanical brake actuators. It is also possible that additional to the data bus there is an additional communication line for the communication between the TCU and/or the APU and the BCU. This additional communication line might for example be used for transmitting a redundant signal between the units for increasing the safety of the brake system. The additional communication line might be unidirectional or bidirectional. The line might transfer an analogue, digital or binary signal. It is also possible that the additional communication line transmits a RF-signal with dynamically encoded signals. The additional communication line might be any type of line and is not necessarily a physical line.

For another embodiment of the invention a service brake control means, e.g. a service brake pedal, is connected via the BCU with the TCU for transmitting the brake actuation demand applied by the driver. Here, the BCU might route the control signal from the service brake control means to the TCU unchanged or might modify the signal for a suitable actuation of the TCU. The same applies in case of (additionally or alternatively) a parking brake control means being connected via the BCU with the TCU. Such parking brake control means might be a button, a switch, a pedal or a handle used for the interaction of the driver with the parking brake. However, the parking brake control means besides a manually operated parking brake control means might also be automatically activated. Examples for such an embodiment of the parking brake control means might be a sensor detecting the driver leaving the cabin, a driver seat sensor, a door signal sensor or a sensor signalling that the combustion engine is started.

The inventive brake system may also comprise an interface with an electrical port. This electrical port might be used for transferring a control signal from a BCU from the tractor to the trailer.

According to another embodiment of the invention, the BCU is redundant, whereas two single BCUs might be integrated into one integral unit or might be embodied as two separate units each comprising one or a plurality of control units. The BCU might also be redundant with respect to its power supply, its connections to the electro-mechanical brake actuators, redundant control signals or communication lines, redundant sensor signals or parameters fed to the BCU and the like.

In another aspect of the invention the service brake control means and/or the parking brake control means only has/have electrical outputs so that there are no pneumatic lines necessary for transferring a signal from the service brake control means and/or the parking brake control means to one of the mentioned control units. The transfer of the electrical output(s) might be provided by one single electrical line or by a plurality or redundant electrical lines.

For also providing a redundant electrical energy supply the invention suggests to provide at least two separate electrical power sources in the brake system for feeding electrical energy to the electro-mechanical brake actuators and/or the at least one BCU. Here, the electrical power source might be built by two separate batteries, by a battery and a generator of any type or by two batteries with the option of reloading the batteries by at least one generator.

It is possible that in the inventive brake system the at least two batteries are directly charged by a generator. However, the invention also suggests that the two batteries are charged under the control of and via the BCU. The BCU (or a plurality of BCU) controls the charging process in dependence on the battery type, avoids an overcharging, divides and assigns the electrical energy from the generator to the batteries and/or priorizes the charging process of one of the two batteries being of larger importance for the driving safety.

For another embodiment the invention suggests that additional to the at least one BCU a power control unit (PCU) is provided. The PCU controls the charging process of the at least two batteries from the generator. The BCU and/or PCU might also be used for controlling the activation of a generator, e.g. by controlling a clutch linking a drive train of the tractor with the generator.

The present invention covers the use of an electro-mechanical brake actuator of any known type. However, for one embodiment of the invention the brake system comprises electro-mechanical brake actuators of a self-enforcing type providing an increased efficiency of the brake system.

It is possible that the at least one BCU (and also the PCU) works on its own and independently. However, the invention also suggests that the at least one BCU is linked with another control unit. Such link might be used for transferring operating parameters of the control units or signals available at one control unit to another control unit. It is also possible that one control unit uses the capacity of the other control unit or a memory related with the other control unit. The link between the units might be provided by a vehicle data bus, by any line or separate line. The other control unit linked with the at least one BCU might be a CPU related with a gearbox, with a retarder, with the engine control. with an air suspension, with a shock absorber, with a compressor for supplying pressurized air and the like.

Another aspect of the invention relates to the supply of electrical energy to the APU and/or TCU: For this embodiment these units are supplied with electrical energy from the at least one battery supplying electrical energy to the at least one BCU. This type of energy supply might be a fall-back supply in case of another energy source for the APU and/or TCU being exhausted or failing. However, it is also possible that the battery is permanently responsible for supplying energy to the APU and/or TCU. The energy supply from the battery to the APU and/or TCU might be directly or indirectly via the BCU.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims.

## BRIEF DESCRIPTION OF THE DRAWINGS

In the following, the invention is further explained and described with respect to preferred exemplary embodiments illustrated in the drawings.

**Fig. 1**     is a schematical view of an operating system of a tractor with a pressurized air system and an electro-mechanical brake system.

**Fig. 2**     schematically shows an alternative embodiment of an operating system with a pressurized air system and an electro-mechanical brake system.

**Fig. 3**     schematically shows a flow chart for determining a trailer force request in an electro-mechanical brake system.

**Fig. 4**     schematically shows a flow chart of signals for controlling a motor of a brake actuator.

**Fig. 5**     shows a pedal characteristic used in a step of the flow chart of Fig. 3.

**Fig. 6**     shows characteristics for split friction control.

**Fig. 7**     schematically shows one embodiment for an electro-mechanical brake actuator with the related electronic unit.

**Fig. 8**     schematically shows a pneumatic brake circuit (prior art).

**Fig. 9**     schematically shows an electro-mechanical brake circuit with output signals used for determining an estimated brake force.

**Fig. 10**    schematically shows a free body diagram of a tractor and a trailer.

**Fig. 11**    shows a schematical block diagram for an inventive method for determining the trailer force request on the basis of a comparison of a predicted retardation and an actual measured retardation.

**Fig. 12**    shows a characteristic of the trailer brake request over an auxiliary trailer brake request or a retardation demand.

**Fig. 13**    shows a characteristic of a first correction factor in dependence on a trailer brake request.

**Fig. 14**    shows a characteristic of a second correction factor in dependence on a trailer brake request.

## DESCRIPTION OF THE DRAWINGS

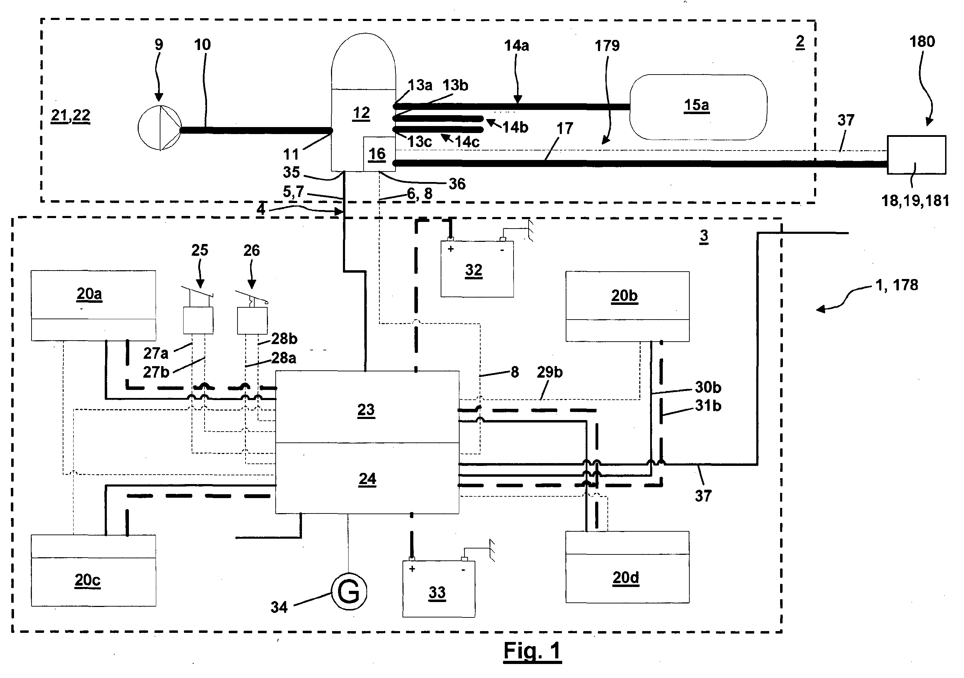

**Fig. 1** illustrates an operating system 1 for a utility vehicle comprising a pressurized air system 2 and an electro-mechanical brake system 3. The pressurized air system 2 and the electro-mechanical  brake system 3 are coupled with each other by at least one pneumatical and/or electrical interface 4 and related pneumatic and/or electrical lines, plugs, ports and the like. For the embodiment shown in Fig. 1 the interface 4 is used for transferring electrical brake signals 5, 6 of the tractor from the electro-mechanical brake system 3 to the pressurized air system 2 wherein these signals as well as other signals can be transferred uni-directional or bidirectional. For a preferred embodiment the electrical brake signal 5 of the tractor is transferred by a databus 7, whereas the electrical brake signal 6 is transferred by an analog line 8.

In Fig. 1 the pressurized air system 2 is shown in a rough schematical diagram. The person with skill in the art knows the basic way to build pressurized air systems 2 of the present type. The pressurized air system 2 shown in Fig. 1 as an example comprises a compressor 9. Via a supply line 10 the compressor 9 supplies pressurized air to a supply port 11 of an air processing unit 12. The air processing unit 12 comprises ports 13a, 13b, 13c connected with consumer circuits 14a, 14b, 14c. At least one consumer circuit 14 comprises a reservoir 15. The air processing unit 12 supplies pressurized air to the consumer circuits 14. The air processing unit 12 controls the flow of pressurized air from and to the consumer circuits 14 which might be done by using multiple protection of valves of known types and functions. It is also possible that one reservoir 15a of a specific consumer circuit 14a via the air processing unit 12 supplies other consumer circuits 14b, 14c which might in particular be the case in specific operating states of the pressurized air system 2 or the related consumer circuits 14. To give only some examples one consumer circuit might be an auxiliary consumer circuit, whereas another consumer circuit might be an air suspension circuit and still another consumer circuit builds a trailer brake circuit. It might also be possible that the pressurized air system 2 also comprises a tractor brake circuit, e.g. a pneumatic service brake for one single axis, a redundant pneumatic service brake and/or a pneumatic parking brake. However, it is also possible that the pressurized air system 2 does not have any pneumatic service brake circuit and any pneumatic parking brake circuit related with the tractor and does not have reservoirs and ports related with a pneumatic brake system of the tractor.

For the embodiment shown in Fig. 1 there is a trailer control unit 16 (in the following also "TCU") integrated into the air processing unit. The TCU controls the pneumatic actuation and/or supply of a pneumatic trailer brake circuit 17. In particular the TCU controls the supply of pressurized air to the coupling head 18 for the supply of the trailer with pressurized air and/or the coupling head 19 for the control of the trailer brake. The TCU and/or the air processing unit 12 control(s) these pressurized air signals in dependence on the brake signals 5, 6 of the tractor. The TCU might comprise a CPU and a valve, a plurality of valves and/or other pneumatical components directly or indirectly controlled by the CPU. These used valves might be electrically controlled solenoid valves

-     directly controlling the pneumatical pressures at the coupling heads 18, 19 and/or
-     controlling the pilot pressure of at least one pneumatically controlled valve controlling the pneumatical pressures at the coupling heads 18, 19.

The coupling heads 18, 19 build a pneumatical part of an interface 180 between the tractor and the trailer. Furthermore, the interface 180 in some cases comprises an electrical port 181 for transferring an electrical signal (e.g. an electrical control signal for controlling electrical brakes of a trailer) from the tractor to the trailer and/or for transferring an electrical signal related with an operating state of the trailer to the tractor for being considered by one of the control units.

The electro-mechanical brake system 3 comprises electro-mechanical brake actuators 20a-20d. The actuation of the electro-mechanical brake actuators 20a-20d is controlled in dependence on a tractor brake signal applied by the driver to a braking means as a brake pedal. However, it is also possible that the tractor brake signal is (at least in some operating states) automatically created by a control unit. Pairs of brake actuators 20a-20d are associated with each axle. Fig. 1 shows an embodiment with only two axles whereas also a utility vehicle 21, here a tractor 22, might also have more than two axles.

The tractor brake signals controlling the electro-mechanical brake actuators 20a-20d and correlating with the tractor brake signals 5, 6 transferred via the interface 4 to the pressurized air system 2 are created by two redundant brake control units 23, 24 of the electro-mechanical brake system 3. It is possible that the brake control units 23, 24 are built by separate units that might be linked by lines or a network with each other. It is also possible that the brake control units 23, 24 are housed in a common housing or on a common board. Furthermore, it is possible that the brake control units 23, 24 are built by a dual circuit board.

The tractor brake signals 5, 6 are determined or calculated in dependence on the actuation of a control means 25 by the driver for the service brake, in particular a brake pedal, and/or a control means 26 for a parking brake, here a parking brake lever. The output signals generated by the control means 25, 26 according to the actuation by the driver are each transferred by pairs of redundant lines 27a, 27b, 28a, 28b to the two brake control units 23, 24. For one embodiment of the invention the lines 27, 28 are analog lines whereas any other type of line, connection or network might also be used.

The control of the brake actuators 20 will be explained on the basis of the control of one single brake actuator 20b in Fig. 1: both brake control units 23, 24 transfer a tractor brake signal to the brake actuator 20b. For the shown embodiment the brake control unit 23 uses an analog line 29b, whereas the other brake control units 24 uses a databus 30b. Furthermore, the brake actuator 20b is supplied with electrical energy by at least one electric supply line 31 b. This supply with electrical energy is controlled by the brake control unit 23 and/or the brake control unit 24.

For the embodiment shown in Fig. 1 the control unit 23 controls brake actuators 20b, 20c located at different axles at different sides of the vehicle via the analog lines 29b, 29c. The control unit 23 controls the other brake actuators 20a, 20b associated with different axles and different sides of the vehicle via the databuses 30a, 30d. The brake control unit 24 controls the brake actuators 20b, 20c via the databuses 30b, 30c, whereas the brake actuators 20a, 20b are controlled by the brake control unit 24 via analog lines 29a, 29d. The supply of electrical energy to the brake actuators 20b, 20c via the supplied lines 31 b, 31 c is controlled by the brake control unit 24. The supply of electrical energy to the brake actuators 20a, 20d via the supply lines 31 a, 31d is controlled by the brake control unit 23.

The electro-mechanical brake system 3 comprises two redundant batteries or accumulators 32, 33. A first accumulator 32 supplies the brake control unit 23 with electrical energy for transferring the electrical energy to the brake actuators 20a, 20d in a controlled way. The accumulator 33 supplies the brake control unit 24 with electrical energy, in particular for the controlled transfer to the brake actuators 20b, 20c.

The electro-mechanical brake system 3 also comprises a generator 34. The electrical energy generated by the generator 34 is transferred via the brake control units 23, 24 to the accumulators 32, 33 for recharging the accumulators. The mechanical energy transformed by the generator 34 into electrical energy might be taken from the drive train of the utility vehicle 21 or the movement of the utility vehicle 21.

The tractor brake signals 5, 6 transferred to the pressurized air system 2 and the air processing unit 12 or the TCU 16 depend with a given dependency or function or characteristic diagram from the tractor brake signals transferred to the brake actuators 20a-20d and/or from the manual actuation of the control means 25, 26 by the driver. The tractor brake signals 5, 6 are created or computed by the brake control units 23, 24 by considering any a-priory dependency or characteristic from the output signal of the control means 25, 26.

The tractor brake signals 5, 6 are transferred to the air processing unit 12 and/or the TCU 16 via input ports 35, 36. It is also possible that at least one of the brake control units 23, 24 additionally communicates via an electrical line 37, in particular a databus, with the trailer. Furthermore, it is possible that with this electrical line an electrical tractor brake signal is transferred via a suitable interface or plug to the trailer. This embodiment provides to both electrically control the trailer by an electrical control signal transferred via the electrical line 37 as well as to pneumatically control the trailer via the coupling head. This builds a redundant control of the trailer both on an electric path and a pneumatic path. Furthermore, it is possible that the two ways of connecting the trailer with the tractor are used to provide the option of alternatively connecting a pneumatically braked trailer and an electrically braked trailer with one and the same tractor.

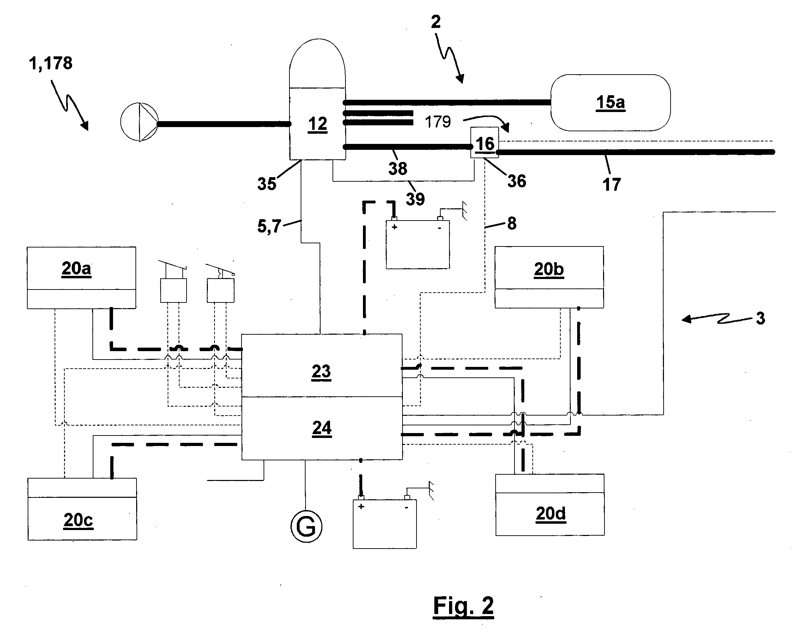

**Fig. 2** shows an embodiment of the operating system 1 similar to the one shown in Fig. 1. However, for the embodiment shown in Fig. 2 the TCU 16 is not integrated into the air processing unit 12 but located separately from the air processing unit 12. For this embodiment the input port 36 for the analog line 8 from the brake control unit 24 is part of the TCU 16. The TCU 16 and the air processing unit 12 are linked by a pneumatic line 38 and by an electrical line 39, in particular a databus communication using the related ports at the air processing unit 12 and the TCU 16. The pressurized air supplied via the pneumatic line 38 is controlled by the trailer control unit 16 in dependence on the signal on the analog line 8 for approximating a suitable pressure in line 17 to be transferred to the trailer.

Further embodiments, functions, explanations, transfers of the electrical signals and pneumatic air streams, methods for the control and the like (in particular concerning the generation of a pressure in the line 17 to the trailer in dependence on the tractor brake signal) can be taken from the European patent application of the applicant Haldex Brake Products GmbH with the title "Druckluftaufbereitungseinrichtung für ein Nutzfahrzeug" filed at the same day as the present European patent application.

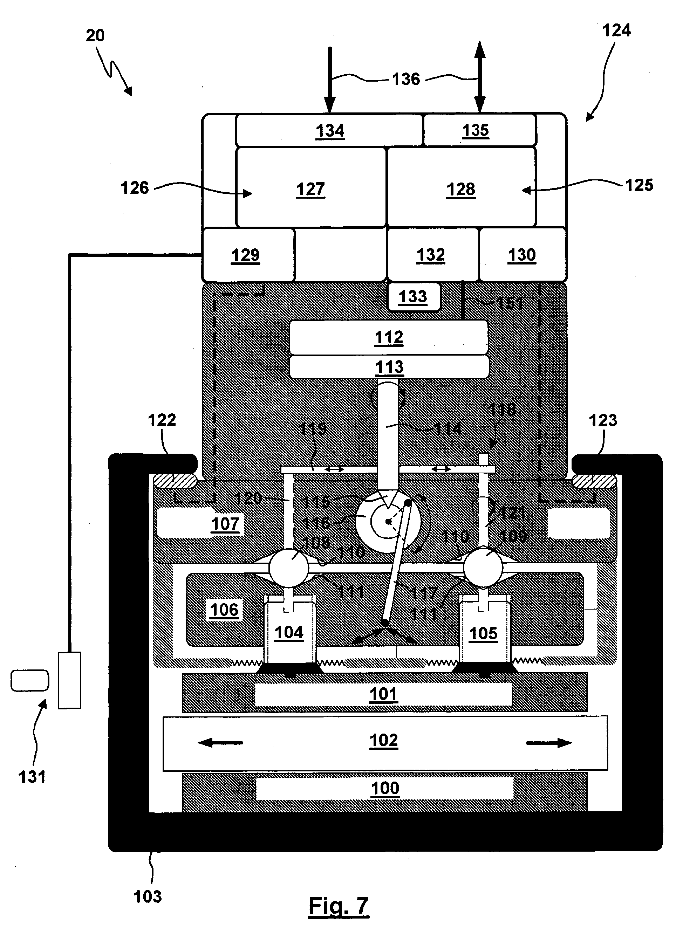

The electro-mechanical brake system 3 for one embodiment of the invention builds a brake-by-wire-system for tractors or trucks, intended for the control of electro-mechanical brake actuators 20 that generate the clamp force by an electric motor 112. The electro-mechanical brake system 3 communicates with the brake actuators 20 via a communication bus, for example FlexRay or CAN and with the control means 25, 26, in particular brake pedal sensors, and with the I/O-modules that controls switches and lamps on the dashboard of the tractor 22. The system communicates to the dashboard of the tractor 22 via a diagnostic bus. The brake control unit 24 communicates with the vehicle J1939-bus. The system is redundant. It is possible that it has four brake pedal sensors as well as four sensors on the parking brake handle. Additional, it is possible that there are two FlexRay or CAN communication circuits and two power circuits. Furthermore, the brake control units 23, 24 might be equipped with software for basic brake system functions such as service braking, park braking, automatic brake blending that might control the retarders. Furthermore, logic is included into the brake control units 23, 24 and/or the brake actuators 20 for preventing real lock during service braking and engine brake and excessive wheel spin during acceleration. It is possible that the brake actuators 20 or at least some of them have computational power of their own, see control unit 127, 128 in Fig. 7. It is also possible that a wheel speed sensor 131 is directly connected or integrated into the brake actuator 20. Furthermore, it is possible that the wheel speed controlling functions such as traction control and slip control are performed locally by a control unit 127, 128 integrated into the brake actuator 20.

The brake actuators 20 might be built as disclosed in the documents EP 1 925 841 B1, EP 1 664 571 B1, DE 103 92 252 T5, DE 11 2004 001 812 T5, DE 11 2004 001 795 T5 and DE 11 2006 001 595 T5 of the present applicant.

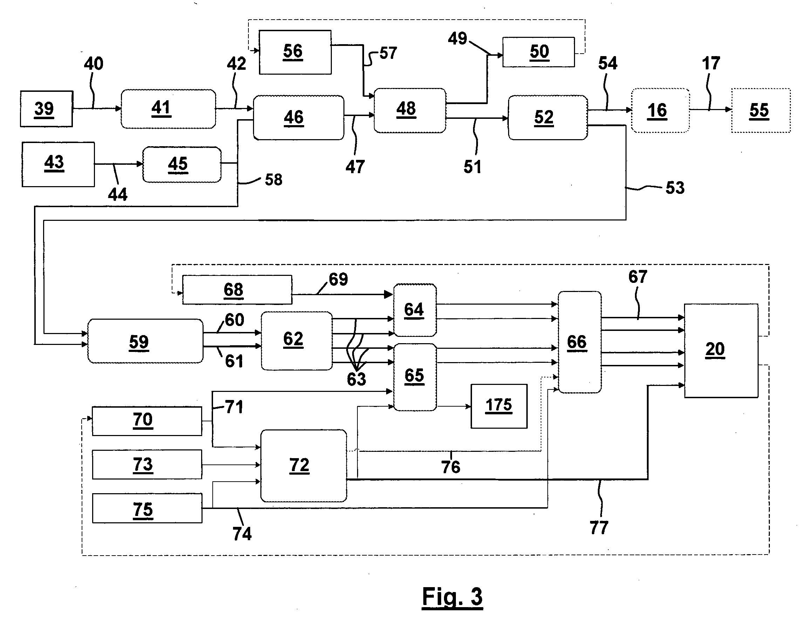

**Fig. 3** shows a simplified flow chart relating to the functions of the electro-mechanical brake system 3 and the cooperation with the TCU 16 and the trailer. A control means embodied as a pedal sensor 39 creates as an output a position signal 40. In a step 41 the position signal 40 is transformed by the brake control units 23, 24 by considering a pedal characteristic to a retardation signal 42. In a parallel path a sensor 43 for the pressure in the air spring bellows or for the level of the air spring bellow outputs a signal 44 according to the sensed level or pressure. From the signal 44 in a step 45 the overall mass including the load of the tractor is determined. In a step 46 the retardation signal 42 former determined in step 41 is transformed under consideration of the overall mass resulting from step 45 to a brake force request 47. In step 48 a brake blending is performed for creating a brake command 49 for a retarder 50 as well as a service brake force request 51 input to a distribution step 52.

The main goal of the retarders 50 is to increase pad and disc life of the brakes as well as to reduce the brake temperatures both on the tractor and on the trailer. With the brake blending performed in step 48, the endurance braking systems are invoked automatically when possible and the function is enabled by putting the retarder stalk arm in "automatic"-position. When the driver commands braking with automatic blending enabled, the brake force request is divided in such a way that both service braking system and endurance braking systems are applied simultaneously. The retarder 50 might be an engine retarder and/or an exhaust retarder. The endurance braking demand value is sent via the J1939 CAN-bus. The brake system is also listening to the response from the retarders on the same bus and corrects the service brake command and trailer brake command such that the demanded retardation will be reached.

The distribution step 52 determines both a tractor brake force request 53 and a trailer force request in dependence on the service brake force request 51. The trailer force request 54 is fed to the trailer control unit 16 creating a pressure in line 17 supplied via the coupling heads to the trailer 55. An output signal of the retarder 50 is used as a control signal and supplied to a step 56 for auxiliary diagnoses creating a retarder brake force signal 57 also input into step 48 for consideration for determining the service brake force request.

The tractor brake force request 53 and a tractor mass signal 58 are input to a step 59 for the axle distribution load apportioning creating a front axle load apportioning signal 60 and a rear axle load apportioning signal 61. The dynamic vertical load distribution on the vehicle axles changes continuously with the cargo position and retardation and braking. The load apportioning function executed in step 59 distributes the brake forces in proportion to the vertical force working on each axle. The mass of the vehicle and the position of the centre of gravity are determined from the air bellow pressure or the air bellow levels. From the vehicle specification the centre of gravity and the weight of the empty truck are known. The extra load on the rear axle is assumed to come from the cargo. The tractor cargo is assumed to be centred along a certain position in longitudinal direction of the factor, while its height increases with the load amount. Then, respective axle load is calculated according to a model using the centre of gravity position, the geometrical data of the vehicle units and the retardation measurements. In a subsequent step 62 the transverse distribution is determined resulting in signals 63 for the left-front-brake-demand, right-front-brake-demand, left-rear-brake-demand and right-rear-brake-demand 63.

Via the units 64, 65, 66 a demand for a brake force signal or brake torque signal 67 is created which is transferred to the brake actuators 20. Unit 65 also generates a signal to be considered by the vehicle engine 175. The brake force created at the brake actuators 20 is indirectly sensed by a clamp force sensor 68. The generated clamp force signal 69 is used by unit 64 for control purposes. In the brake actuators 20 a wheel speed sensor 70 generate a wheel speed signal 71 used for control purposes in unit 65 as well as in a step 72 for estimating the vehicle state. The step 72 also receives signals from an electronical stability control sensor 73 and a steer angle signal 74 from a steer angle sensor 75. Step 72 creates a vehicle motion signal 76 transferred to unit 66 for control purposes and a wheel speed reference signal 77 transferred to the brake actuators 20. The wheel speed reference signal 77 is also transferred for control purposes to unit 65.

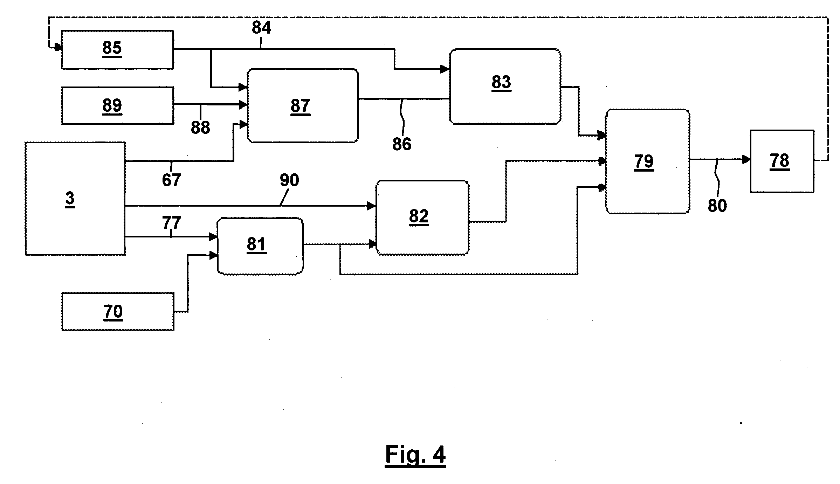

**Fig. 4** shows a simplified flow chart of signals and the control in the brake actuators 20 itself with at least one control unit 127,128 integrated into the brake actuators 20 and the related software. In the brake actuator 20 the created brake force depends on the position or the driving activity of an electrical motor 78, 112. A mode handler 79 determines a motor torque signal 80, i.e. the control signal for the motor 78, 112. The motor torque signal 80 is controlled by the mode handler 79 in dependence on the output of a slip calculator 81, a slip controller 82 and a position controller 83. The position controller 83 creates its output from a position signal 84 created by a motor position sensor 85, 113. The position controller 83 besides the position signal 84 considers a position request 86 determined in a step 87 for an elasticity estimation. The step 87 for the determination of the position request 86 considers the position signal 84, a clamp force signal 88 determined by a clamp force sensor 89 (see also 122, 123 in Fig. 7) as well as the brake force signal 67. The slip controller 82 considers a slip request signal 90 from the electro-mechanical brake system 3 or the brake control units 23, 24 and the output of the slip calculator 81 on the basis of the wheel speed reference signal 77 and the output of the wheel speed sensor 70, 131.

As shown in Fig. 1 the brake pedal stroke is transferred to a retardation request, which is recalculated and distributed to the brakes as brake torque requests. It is possible to graduate the braking. The system is designed to be able to give a total braking force of at least 110kN per axle within 0.3 seconds. Due to the redundancy of components and communication between the brake control units 23, 24 and the brake actuators 20, a single fault on the control lines will not effect the service brake performance. Furthermore, the components of the control circuit, in particular the control units 23, 24 and control units 127,128 of the brake actuators 20, have diagnostics and there are means to monitor the transmitted signals such that failure will be detected directly and indicated to the driver. The brake actuators 20 measure the applied brake force and can supervise the condition of the brake pads. A power distribution module (PDM) in the system, in particular in the brake control units 23, 24, supervises the condition of the accumulators 32, 33 and will warn the driver if the function of the system is deteriorated. Even the energy source is redundant in that there are two accumulators 32, 33 dedicated to the electro-mechanical brake system 3. If both accumulators 32, 33 become weak, a power control module can make use of energy from the vehicle battery. It is possible that automatically in case of both batteries being weak unneeded or auxiliary systems are switched of in a given order depending on safety criteria. This is in particular the case if the overall voltage of an accumulator or both accumulators is below a threshold level.

The brake actuators 20 might also receive a parking brake request through the electro-mechanical brake system 3 from the parking brake control means 26 (here a parking brake control lever) which is placed so that it can be reached from the driver's seat. When the parking brake is applied an electro-magnetic clutch is disengaged and the mechanically stored energy from the parking spring unit is released. The parking spring unit is acting with a constant torque on the motor shaft 114 that applies the brake to a parking brake level to keep the vehicle at standstill by purely mechanical means.

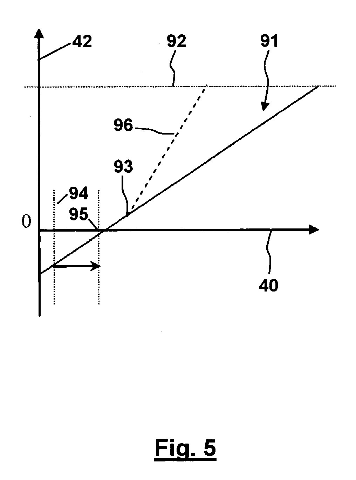

**Fig. 5** shows a pedal characteristic 91 describing the retardation signal 42 as a function of the pedal position signal 40. Here, any pedal characteristic 91 with linear, stepped and/or curved dependency might be used. In the pedal characteristic 91 shown in Fig. 5 the retardation is limited to a maximum 92. The pedal characteristic 91 shows for small pedal position signals 41 negative values used for controlling the slack. For a normal brake actuation the pedal characteristic 91 follows the straight line 93. Only in cases when the brake pedal is pressed very fast resulting in a short time interval between the positions 94, 95 the inclination of the pedal characteristic 91 is increased to a second straight line 96 resulting in a lager retardation signal 42.

Within the slip controller 82 wheel lock is avoided by controlling and limiting the wheel slip to prevent vehicle instability during braking particularly under slippery surfaces. The control of the wheel speed is managed locally within each brake actuator 20. The system provides the reference speed (calculated from the estimated vehicle speed) for each wheel and also under some conditions a target slip. The wheel speed sensors 70, 131 are connected directly to respective control units 127,128 and/or to the brake control units 23, 24 to minimize the control and time delays.

The system prevents sudden large brake force differences between the left and right wheels on the front axle due to different road friction under respective wheels, so called split friction. If the friction is low on one side and the driver brakes hard the brake forces may become asymmetrical. The driver may lose the control of the steering wheel and also the entire vehicle. The system helps the driver to limit the rate for how the left and right brake forces can diverge. If split friction during braking occurs the brake on low friction side will start to control the wheel slip. To the high friction side system limits the brake force demand based on the brake forces on the low friction side. Then, it slowly increases the brake demands to the high friction side. The brake force on the high friction side will be raised to its demand or maximum value, but sufficiently slows so that the driver has time and the possibility to counter steer.

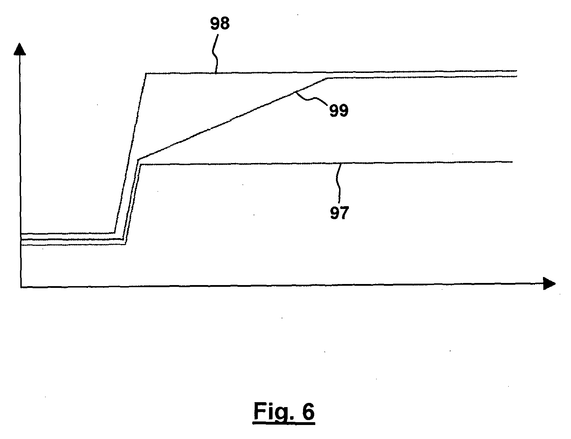

**Fig. 6** shows the brake force over time during split friction. Here, curve 97 shows the physical limit due to low friction at the wheel on low friction road, whereas curve 98 shows the pedal demand correlating with position signal 40. Curve 99 shows the rate limitation to avoid oversteering with in the end the friction at the wheel on high friction road.

The electro-mechanical brake system 3 also may prevent excessive wheel slip when the tractor is accelerating. The wheel control is managed by a local slip controller 82 within respective brake. A controller in the system software limits the accelerating engine torque. Traction control performed by the brakes is an auxiliary function which is according to one embodiment only active if the energy capacity, so the capacity of the accumulators 33, 32, is sufficient. It is also possible, that the brake control is only active below 40km/h. There is a special "off-road" mode on the traction control function that may be commanded by the driver by a push button on the dashboard. The "off-road" mode allows higher slips on the driven wheels.

Engine braking can in slippery conditions and in low gears cause too high brake slip on the driven wheels. To avoid vehicle yaw instability, the system will demand a torque from the engine to control and limit the wheel slip in such occasion. Also a roll-over control and a directional stability control might be integrated in the software of the control units, in particular brake control units 23, 24 and/or control units of the brake actuators 20 itself.

Furthermore, a pad wear monitoring or control might be integrated with the purpose to provide an advance warning to the driver or mechanic of a low pad thickness condition. It is also possible to provide information to the control units relating to pad wear to enable adjustment to the brake distribution to equalize wear. It is also possible to provide an indication of a defective brake (e.g. slide pins stuck). The brakes have a pad wear sensor that measures the position of the brake pads 100, 101 or relative components. In particular the wear sensor measures the position of the adjustment screws or of distance means 104, 105 so that the average wear can be measured over both brake pads 100, 101. If there is a bias of one brake pad 100, 101 over another (due to vehicle operating environment, e.g. an outer pad may always wear more than the other) this may lead to a false reporting of "good brake pads".

It is also possible that operating states of any component or of internal signals are stored so that it is possible to analyse failures later in time.

**Fig. 7** schematically shows a brake actuator 20 basing on a self-amplifying principle. In the brake actuator 20 two brake pads 100, 101 are pressed in an actuating direction corresponding to the axis of rotation of the brake disc 102 in opposite directions against the brake disc 102. It is possible that the brake actuator 20 is fixedly attached to the vehicle chassis which means that the brake disc 102 must have a certain (although limited) axial movability in relation to the brake disc 102, mainly in the practical case in relation to its shaft. However, in other embodiments the brake actuator 20 may be of the so called floating type for cooperation with an axially fixed brake disc 2. The brake pads 100, 101 are attached to brake pad holders (not shown in Fig. 7). Brake pad 100 with the related holder is attached to a brake yoke 103.

By adjustable distance means 104, 105 the brake pad 101 (and the related holder) are attached to a ramp plate 106. The ramp plate 106 is in turn connected to a ramp bridge 107 by means of rollers 108, 109 building a rolling contact with ramps 110, 111 on the ramp plate 106 and the ramp bridge 107, respectively. The rollers 108, 109 are preferably arranged in a common roller cage (not shown) for obtaining full control and completely synchronised movement of the rollers 9 (irrespective of their actual number). The need for a roller cage is especially relevant, if the ramps 110, 111 are curved for obtaining certain brake characteristics.

The ramp bridge 107 is fixedly attached in the vehicle chassis and is provided with means for creating a control force and for maintaining a certain predetermined slack between on one hand the brake disc 102 and on the other hand the brake pads 100, 101.

An electric motor 112 with a transmission 113, in particular a planetary gear, can rotate a motor shaft 114 in either direction. The transmission 113 is used for reducing the rotational speed of the motor 112. It is also possible that the transmission might include a parking and safety brake arrangement.

A bevel gear 115 arranged on the motor shaft 114 is in driving gear engagement with a bevel gear disc 116 rotationally supported by the ramp bridge 107. Eccentrically connected to the bevel gear disc 116 is a crank rod 117 pivotally connected to the ramp plate 106.

By turning the bevel gear disc 116 in either direction by means of the bevel gear 115 from the motor 112, the position of the ramp plate 106 in relation to the ramp bridge 107 can be set. When a friction engagement between the brake pad 101 (and brake pad 100) and the brake disc 102 has been established (over the distance means 104, 105 between the ramp plate 106 and the brake pad holder) an application force amplification will be accomplished by the rollers 108, 109 climbing the respective ramps 110, 111 in response to a tangential movement of the ramp plate 106 caused by the friction engagement with the brake disc 102. The application force may be accurately controlled by rotating the motor 112 in either direction.

By means of motor 112 or an additional motor a slack adjusting arrangement 118 is driven over a drive belt 119, a drive chain or the like. In case of using motor 112 for driving the drive belt 119 an additional transmission, an electromagnetic clutch and a drive sprocket might be arranged in the force flow between the motor 112 and the drive belt 119. In this case the electromagnetic clutch might only be engaged when a slack adjustment is desired. The drive belt 119 drives rods 120, 121 for a rotational movement. However, the driving connection of the rod with the drive belt 119 as well as with other components is designed such that a rotational adjusting movement of rods 120, 121 may be transmitted in spite of relative movements between the ramp plate 106 and the ramp bridge 107. The end regions of the rods 120, 121 opposite to the drive belt 119 are linked with distance means 104, 105 for transferring the rotational movement. The distance means 104, 105 are screwed into the ramp plate 106. Accordingly a rotational movement of the distance means 104, 105 caused by the rotation of the rods 120, 121 leads to a change of the distance of the brake pad 101 (and brake pad 100) from the brake disc 102. Such change of the distance might be used for an adaptation process for decreasing thicknesses of the brake pads 100, 101 due to wear. Two force sensors 122, 123 are located in the force flow between the ramp bridge 107 and the brake yoke 103 in axial direction. The force sensors 122, 123 in a redundant way measure the clamp force so that the signals of these force sensors 122, 123 correlate with the signals of the clamp force sensor 89 in the former figure. The force sensors 122, 123 might be of any suitable kind. The output signal of the sensors 122, 123 can be used for feedback at braking for controlling the electrical motor 112. At the application of the brake actuator 20, as controlled by the motor 112 via the crank rod 117, the brake pads 101, 100 will be applied against the brake disc 102, which can be supposed to be rotating in forward direction in Fig. 7 to the left and in backward direction in Fig. 7 to the right as shown with the arrows. The brake actuator 20 has a self-servo effect, wherein the brake application force will be controlled by the motor 112. The ramp plate 106 with the elements connected there too, for example the brake pad 101, has to be movable to a certain extend in the rotation direction of the brake disc 102 for allowing the rollers 108, 109 to move along the ramps 110, 111.

A torsional moment is created on the brake pad 101 during braking. This moment is striving to rotate or tilt the brake pad 101 around an axis which is parallel to the axis of the brake disc 102 and normally within the friction surface of the brake pad. Care is taken to this moment. A guiding is accomplished for the brake pad 101 and thus for all elements connected thereto, especially the ramp plate 106, while not negatively influencing the movements required for the self-servo effect of the brake actuator 20.

Integrated into the brake actuator 20 is an electronic unit 124. The electronic unit 124 includes two separate parts 125, 126. The parts 125, 126 each comprise a control unit 127, 128 and a sensor interface 129, 130 respectively. The sensor interface 129 receives signals from the force sensor 122 as well as a wheel speed sensor 131. The sensor interface 130 receives the output signal from force sensor 123. The part 125 also comprises a motor interface 132 connected with the motor 112. The motor interface 132 (or the sensor interface 130) of part 125 might also be connected with a position sensor 133 sensing the angular position of the motor 112, an element of the transmission 113, the angular position of motor shaft 114 or other driven elements. The electronic unit 124 comprises an electric power supply 134 and a bus communication 135 both linked by an interface 136 with the brake control units 23, 24.

The geometry of the ramps 110, 111 is optimized for a certain pad-disc-friction-characteristic, which might be optimized so that there is no torque required from the motor 112 to keep the clamp force steady. If the friction is higher than this, the brake becomes self-locking and the motor 112 has to work for releasing the brake pad 100, 101. It is possible that one force sensor 122 is connected to a control unit 127, 128 of the brake actuator 20, whereas the other force sensor 123 is connected with the brake control unit 23, 24. Furthermore, it is possible that the brake actuator 20 has two separated processors or control units 127, 128 for sensor signal processing and control which can validate each other.

For further details concerning possible embodiments of a brake actuator 20 with a self-amplifying effect see related patents of the applicant as DE 11 2006 001 595 T5, see also EP 1 925 841 B1, EP 1 664 571 B1, DE 103 922 52 T5, DE 11 2004 001 812 T5, DE 11 2004 001 795 T5.

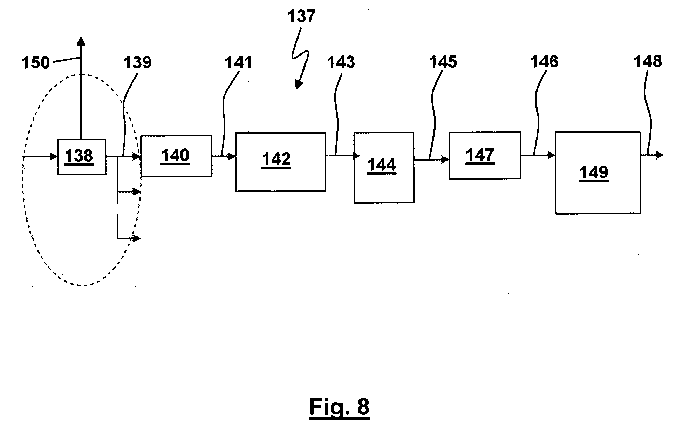

**Fig. 8** schematically shows a conventional pneumatic brake system 137 wherein an EBS control unit 138 creates a pneumatical brake pressure 139. The brake pressure 139 acts on a piston 140 of the pneumatic brake actuator causing a piston force 141 via a brake mechanism 142. The piston force 141 is transformed into a clamp force 143 pressing the brake pad 144 against the brake disc 102 resulting in a frictional force 145 between the brake pad 144 and the brake disc 102. The applicable brake torque 146 depends on the frictional force 145 and the brake geometry 147. Finally, the actual brake force 148 depends both on the brake torque 146 as well as the wheel geometry and the road/tire-friction 149. For prior art pneumatic brake systems 137 the brake force being of interest is estimated on the basis of an output signal 150 of the EBS control unit 138 or the brake pressure 139 measured in a line supplying the brake pressure 139 to the piston 140. The estimated actual brake force 148 depends on a model of the whole chain of the components located between the line with the brake pressure 139 and the actual brake force 148 - in case of any inaccuracies of the used model the estimated brake force differs from the actual brake force 148. It has been observed that deviations might also depend on operational states of the pneumatic brake system 137. To name only some nonlimiting examples linear or non-linear changes in the characteristics of the brake mechanism 142, a change of the brake pad due to wear, a change of the frictional characteristics between the brake pad and the brake disc, changes in the brake geometry 147 and/or changes in the load-tire friction 149 might be a reason for a deviation of the estimated brake force from the actual brake force 148 for these prior art systems.

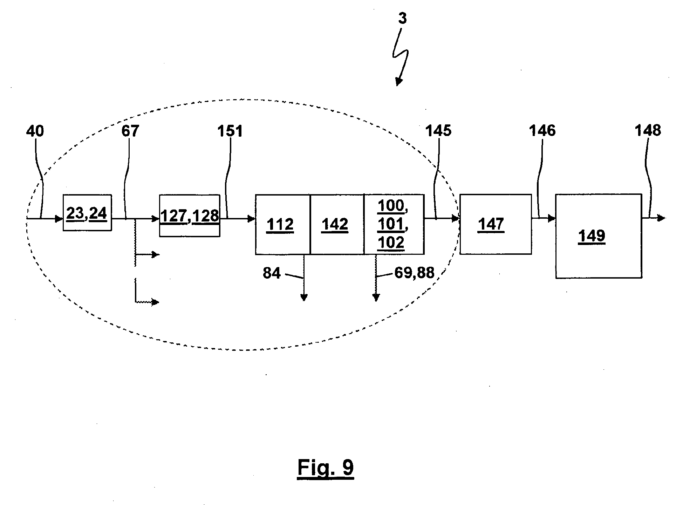

**Fig. 9** schematically shows an electro-mechanical brake system 3 wherein, with additional steps as described above, a brake control unit 23, 24 determines a brake force signal 67 from a position signal 40 of a pedal sensor 39. The brake force signal 67 is transferred to the control unit 127, 128 of a brake actuator 20. The control unit 127, 128 via the interface 132 determines a motor control signal 151 used for controlling the motor 112. The motor 112 via the brake mechanism 142 changes the clamp force 69 between the brake pad 100, 101 and the brake disc 102. As explained for Fig. 8 the frictional force 145 is transformed by the brake geometry 147 to a brake torque 146. The actual brake force results from the brake torque 146 under consideration of the brake and wheel geometry and the road-tire friction 149.

According to the invention the estimated brake force is determined under consideration of the clamp force 69, 88 measured by a clamp force sensor 89 or the two clamp force sensors 122, 123. Any inaccuracies, non-linearities or influencing effects occurring "upstream" in the transfer path of Fig. 9 do not lead to an error in the estimated brake force. Whereas it is also possible that the estimated brake force is solely determined on the basis of the clamp force with a reduced model considering the friction characteristics between the brake pad 100, 101 and the brake disc 102, the brake geometry 147, the wheel geometry and the road-tire friction 149, it is also possible that additionally a position signal 84, the motor control signal 151, an electric control signal in the control units 127, 128, the brake force signal 67, a control signal in the brake control unit 23, 24 and/or a position signal 40 of a pedal sensor 39 is used for estimating the brake force brake torque or for a verification and/or correction or adaptation of an estimated brake force or brake torque.

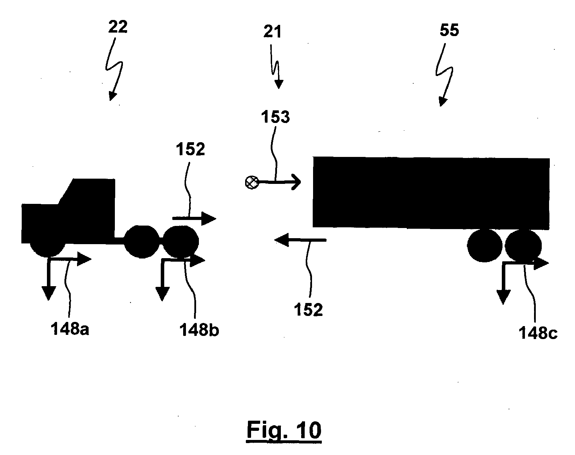

**Fig. 10** shows a free body diagram of a tractor-trailer combination with a tractor 22 and a trailer 55. The free body diagram shows the coupling force 152 between the tractor 22 and the trailer 55, actual brake forces 148a, b, c at the wheel and axles and the inertial force 153.

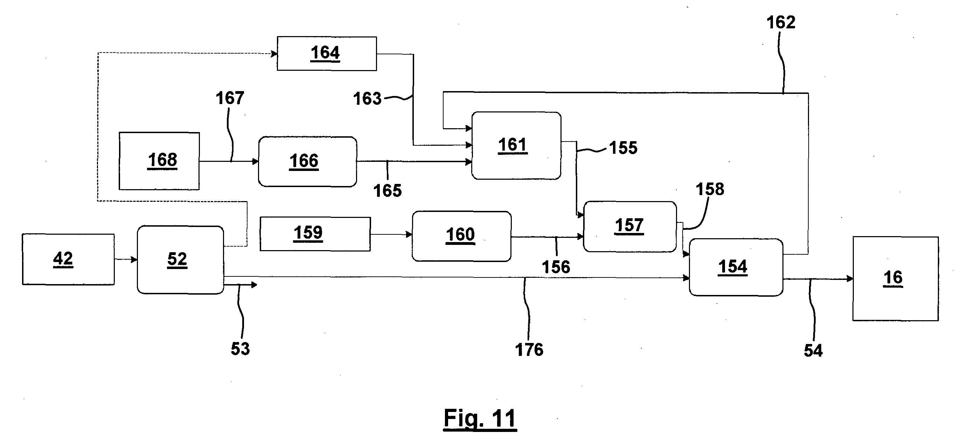

**Fig. 11** shows schematically a block diagram for determining a trailer force request 54 for the trailer control unit 16. The scope is to control the trailer force request 54 such that for a given retardation signal 42 the coupling force 152 equals a desired coupling force, e.g. a zero coupling force. According to Fig. 11 in the distribution step 52 besides the tractor brake force request 53 an auxiliary trailer force request 176 is determined. The auxiliary trailer force request 176 is transformed on the basis of a trailer brake model 154 to the trailer force request 54. The trailer brake model 154 incorporates the dependency of a trailer brake force from a trailer force request 54 transferred to the TCU 16. For an optimal control of the trailer force request 54 a predicted retardation 155 equals the actual measured retardation 156 so that in a trailer brake correction step corrections 158 transferred to the trailer brake model 154 are not necessary or the correction is a zero correction. The actual retardation 156 is determined on the basis of a vehicle motion sensor 159 and a vehicle state estimator 160. The predicted retardation 155 is calculated by a retardation predictor 161 that considers a trailer brake force prediction 162 of the trailer brake model 152 and actual brake forces 163 determined from brake force sensor 164. It is possible that the brake force sensor 164 directly measures a brake force 163 in a brake actuator 20. However, according to a preferred embodiment the brake force 163 is determined on the basis of a measured clamp force 69, 88 (and additional signals as shown and described for the schematic block diagram of Fig 9). Furthermore, the retardation predictor 161 considers the vehicle mass 165 and/or the position of the centre of gravity. These static or dynamic parameters are determined by a vehicle mass estimator 166 from the pressure 167 measured by a bellow pressure sensor 168.

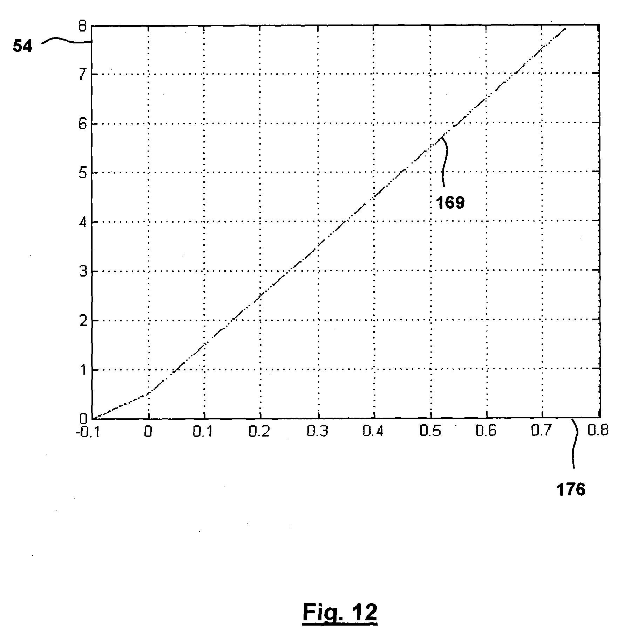

**Fig. 12** shows a characteristic 169 with the trailer force request 54 over the auxiliary trailer force request 176. The curvature of the characteristic 169 considers the dependency of an actual brake force at the trailer from the trailer force request 54, i.e. a controlled pressure produced by the trailer control unit 16 and transferred by the coupling head to the pneumatic brake circuit of the trailer. The characteristic 169 is implemented into the trailer brake model 154. When cutting the input of the correction 158 into the trailer brake model 154 the trailer brake request 54 would be solely dependent on the auxiliary trailer force request 176. However, in case of the predicted retardation 155 differing from the actual retardation 156 this difference observed by the trailer brake correction step 157 is used as an indicator that the braking action at the trailer does not have the desired amount which is also an indicator that the coupling force 152 differs from a desired coupling force. According to the amount and/or quality of the correction 158 output from the trailer brake correction step 157 the trailer brake model 154 additionally to the characteristic 169 considers correction factors 170, 171. For one embodiment these correction factors 170, 171 are dependent on the auxiliary trailer brake request 176 or the first approximation of the trailer brake request 54.

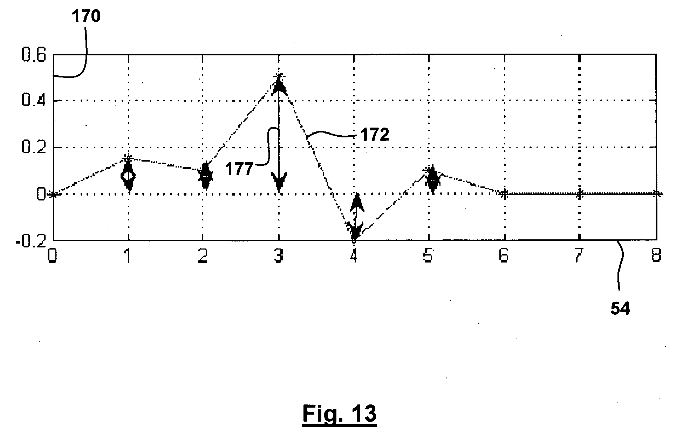

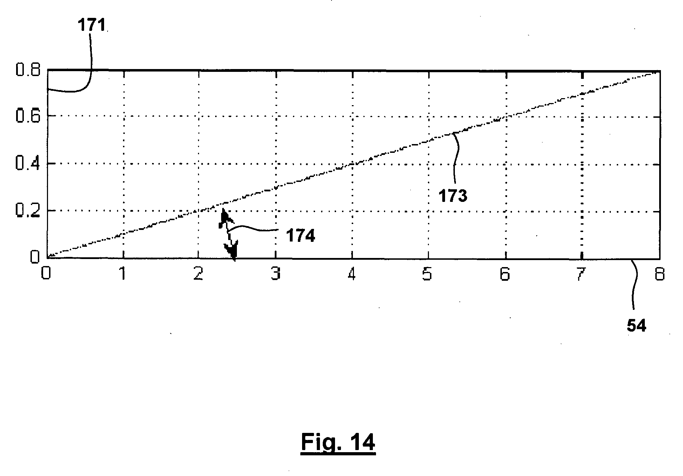

**Fig. 13 and 14** show characteristics 172, 173 of the correction factors 170, 171 on the trailer brake request 54 given as a pressure in bar. Here, the characteristic 172 comprises linear subintervals whereas the corners of the characteristic 172 are determined at given brake force requests 54 and the straight lines between the corners are interpolated. Fig. 14 shows a linear characteristic 173 with a given slope 174. It is possible that the characteristics 172, 173 are determined during the us of the vehicle and/or adapted throughout the use of the tractor-trailer combination. However, it is also possible that the characteristics 172, 173 are a-priori given and stored.

The inventive method for controlling the brake actuation of a brake system of a tractor towing a trailer might base on the longitudinal force equilibrium equation. This equation relates the forces working on the tractor and the trailer with the vehicle combination retardation, see Fig. 10. These forces are for instance the rolling resistance, the air drag, gravity if the road has a gradient, the driving and braking forces on the wheels from the brakes or drive train. One simplified longitudinal force equilibrium equation is as follows:

$$m_v a_x = \Sigma\, F_{Tractor,\, i} + F_{Resistance} + m_v g\alpha + F_{Trailer}.$$

The brake forces at the wheels of the trailer $F_{Tractor,\, I}$ according to the invention are determined from the brake actuators 20, in particular under consideration of the clamp force 88. The rolling resistance and the air drag ($F_{Resistance}$) can be estimated during rolling and the road gradient $\alpha$ may be neglected if the function may run for a longer period. On the basis of a comparison of the estimated and the actual retardation in the inventive method the brake request for the brake actuators 20 of the tractor and/or the trailer brake request can be adjusted so that the braking of the tractor-trailer combination gets well harmonized. For a simplification in the inventive method the difference in friction between the two brake pads 100, 101 can be neglected. As shown in  Fig. 13 the range of the trailer force request 54 is divided into smaller intervals. To each interval a correction factor 177 is assigned. During braking with a certain retardation signal 42 the correction factor belonging to this interval is updated.

For a preferred embodiment of the invention the longitudinal force equilibrium equation considers a brake force created by at least one retarder 50. The brake force of the retarders 50 can be determined by the retarder itself or can be considered on the basis of the brake command signal 49 or a signal output with the step 48 of brake blending.

For another preferred embodiment the trailer brake request 54 is calculated under consideration of an operating state of the electro-mechanical brake system 3, the actuators 20 and/or the accumulators 32, 33. In case of an indicator signalizing that the electro-mechanical brake system 3 does not work properly it might be helpful to increase the trailer brake request 54 in order to brake the tractor-trailer combination with a larger brake distribution to the trailer. To mention only one example this might be used for operating states wherein the energy status of the accumulators 32, 33 is low.

The above applies both to a vehicle combination comprising a semi-trailer or a trailer which (unlike a semi-trailer) completely supports its own load. Furthermore, the above also applies to a vehicle combination comprising more than one trailer.

The figures 3, 4, 9, 11 disclose methods with a plurality of method steps and/or elements involved. The present invention as claimed with the appended claims might also be embodied in a method incorporating both features of one claim as well as one single step, a combination of some steps or of all steps and/or elements of the before mentioned methods.

In the figures a brake system 178 of the tractor is built with the electro-mechanical brake system 3 and a pneumatic brake circuit 179 for a trailer to be coupled with the tractor. The pneumatic brake circuit 179 is built with the TCU 16 and the trailer brake circuit 17 of the tractor.

In the drawing and the specification at some places different reference numerals have been used for the different embodiments of the same component, the same method step and/or the same force or signal. Despite different reference numerals being used in these cases it is possible to combine features of different figures and embodiments by linking the same  elements, method steps, force or signal in one figure with one reference numeral with the corresponding element, method step, force or signal in another embodiment.

## LIST OF REFERENCE NUMERALS

| | |
|---|---|
| 1 | operating system |
| 2 | pressurized air system |
| 3 | electro-mechanical brake system |
| 4 | interface |
| 5 | brake signal |
| 6 | brake signal |
| 7 | databus |
| 8 | analog line |
| 9 | compressor |
| 10 | supply line |
| 11 | supply port |
| 12 | air processing unit (APU) |
| 13 | port |
| 14 | consumer circuit |
| 15 | reservoir |

| | |
|---|---|
| 16 | trailer control unit (TCU) |
| 17 | trailer brake circuit |
| 18 | coupling head "supply" |
| 19 | coupling head "control" |
| 20 | electro-mechanical brake actuator |
| 21 | utility vehicle |
| 22 | tractor |
| 23 | brake control unit (BCU) |
| 24 | brake control unit (BCU) |
| 25 | service brake control means |
| 26 | parking brake control means |
| 27 | line |
| 28 | line |
| 29 | line |
| 30 | databus |
| 31 | electrical supply line |
| 32 | accumulator |
| 33 | accumulator |
| 34 | generator |
| 35 | input port |
| 36 | input port |
| 37 | electrical line |
| 38 | pneumatic line |
| 39 | pedal sensor |
| 40 | position signal |
| 41 | step |
| 42 | retardation signal |
| 43 | sensor |
| 44 | signal (pressure, level) |
| 45 | step |
| 46 | step |
| 47 | brake force request |
| 48 | step |
| 49 | brake command |
| 50 | retarder |
| 51 | service brake force request |
| 52 | distribution step |
| 53 | tractor brake force request |
| 54 | trailer force request |
| 55 | trailer |
| 56 | step |
| 57 | retarder brake force signal |
| 58 | tractor mass signal |
| 59 | step |
| 60 | front axle load apportioning signal |
| 61 | rear axle load apportioning signal |
| 62 | step |
| 63 | demand |
| 64 | unit |
| 65 | unit |
| 66 | unit |
| 67 | brake force signal |
| 68 | clamp force sensor |
| 69 | clamp force signal |
| 70 | wheel speed sensor |
| 71 | wheel speed signal |
| 72 | step |
| 73 | ESC sensor |

| 74 | steer angle signal |
|---|---|
| 75 | steer angle sensor |
| 76 | vehicle motion signal |
| 77 | wheel speed reference signal |
| 78 | motor |
| 79 | mode handler |
| 80 | motor torque signal |
| 81 | slip calculator |
| 82 | slip controller |
| 83 | position controller |
| 84 | position signal |
| 85 | motor position sensor |
| 86 | position request |
| 87 | step |
| 88 | force signal |
| 89 | clamp force sensor |
| 90 | slip request signal |
| 91 | pedal characteristic |
| 92 | maximum |
| 93 | straight line |
| 94 | position |
| 95 | position |
| 96 | second line |
| 97 | curve |
| 98 | curve |
| 99 | curve |
| 100 | brake pad |
| 101 | brake pad |
| 102 | brake disc |
| 103 | brake yoke |
| 104 | distance means |
| 105 | distance means |
| 106 | ramp plate |
| 107 | ramp bridge |
| 108 | roller |
| 109 | roller |
| 110 | ramp |
| 111 | ramp |
| 112 | electrical motor |
| 113 | transmission |
| 114 | motor shaft |
| 115 | bevel gear |
| 116 | bevel gear disc |
| 117 | crank rod |
| 118 | slack adjusting arrangement |
| 119 | drive belt |
| 120 | rod |
| 121 | rod |
| 122 | force sensor |
| 123 | force sensor |
| 124 | electronic unit |
| 125 | part |
| 126 | part |
| 127 | control unit |
| 128 | control unit |
| 129 | sensor interface |
| 130 | sensor interface |
| 131 | wheel speed sensor |

132 motor interface
133 position sensor
134 electric power supply
135 bus communication
136 interface
137 pneumatic brake system
138 EBS control unit
139 brake pressure
140 piston
141 piston force
142 brake mechanism
143 clamp force
144 brake pad/brake disc
145 frictional force
146 brake torque
147 brake geometry
148 brake force
149 road-tire friction
150 output signal
151 motor control signal
152 coupling force
153 inertial force
154 trailer brake model
155 predicted retardation
156 actual retardation
157 trailer brake correction step
158 correction
159 vehicle motion sensor
160 vehicle state estimator
161 retardation predictor
162 trailer brake force prediction
163 actual brake forces
164 brake force sensor
165 vehicle mass
166 vehicle mass estimator
167 pressure
168 bellow pressure sensor
169 characteristic
170 correction factor
171 correction factor
172 characteristic
173 characteristic
174 slope
175 engine
176 auxiliary trailer force request
177 correction factor
178 brake system
179 pneumatic brake circuit
180 interface
181 electrical port

**Claims**

1.  Brake system (178) of a tractor comprising

    a) solely electro-mechanical brake actuators (20),
    b) a pneumatic brake circuit (179) for a pneumatic trailer brake system,

c) an interface (180) for pneumatically connecting the pneumatic brake circuit (179) of the tractor with the trailer **characterised by**

d) a trailer control unit (16) with control logic for controlling at least one pneumatical pressure at the interface (180) in dependence on the actuation of the electro-mechanical brake actuators (20).

2. Brake system (178) of claim 1, wherein the trailer control unit (16) is integrated into an air processing unit (12).

3. Brake system (178) of claim 1 or 2 wherein the trailer control unit (16) and/or the air processing unit (12) is/are electrically connected with at least one brake control unit (23; 24) controlling at least one of the electro-mechanical brake actuators (20).

4. Brake system (178) of one of claims 1 to 3 wherein the trailer control unit (16) and/or the air processing unit (12) is/are connected with at least one brake control unit (23; 24) via a data bus (30).

5. Brake system (178) of claim 4 wherein the trailer control unit (16) and/or the air processing unit (12) are connected with at least one brake control unit (23; 24) via an additional communication line (29).

6. Brake system (178) of one of claims 1 to 5 wherein a service brake control means (25) and/or a parking brake control means (26) is/are connected via at least one brake control unit (23; 24) with the trailer control unit (16) and at least one brake control unit (23; 24) is configured for sending a signal to the trailer control unit (16) which is dependent on the actuation of the service brake control means (25) and/or the parking brake control means (26).

7. Brake system (178) of one of claims 1 to 6 comprising at least one additional pneumatic consumer circuit (14) supplying pressurized air to an air suspension system or another pneumatic consumer.

8. Brake system (178) of one of claims 1 to 7 wherein the interface (180) comprises an electrical port (181).

9. Brake system (178) of one of claims 3 to 8 wherein redundant brake control units (23; 24) are provided.

10. Brake system (178) of one of claims 6 to 9 wherein the service brake control means (25) and/or the parking brake control means (26) only has/have electrical outputs.

11. Brake system (178) of one of claims 1 to 10 wherein at least two separate electrical power sources (32; 33) are provided supplying electrical energy to the electro-mechanical brake actuators (20) and/or the at least one brake control unit (23; 24).

12. Brake system (178) of one of claims 1 to 11 wherein the at least two batteries (32; 33) are charged by a generator (34) via at least one brake control unit (23; 24).

13. Brake system (178) of one of claims 1 to 12 wherein the at least two batteries (32; 33) are charged by a generator (34) via a power control unit.

14. Brake system (178) of one of claims 1 to 13 wherein the electro-mechanical brake actuators (20) are self-enforcing.

15. Brake system (178) of one of claims 1 to 14 wherein the at least one brake control unit (23; 24) is linked with another control unit.

16. Brake system (178) of one of claims 1 to 15 wherein the air processing unit (12) and/or trailer control unit (16) are supplied with electrical energy from the at least one battery (32; 33) supplying electrical energy to the at least one brake control unit (23; 24).

**Patentansprüche**

1. Bremssystem (178) eines Zugfahrzeugs mit

a) ausschließlich elektromechanischen Bremsaktuatoren (20),
b) einem pneumatischen Bremskreis (179) für ein pneumatisches Anhängerbremssystem,

c) einem Interface (180) für eine pneumatische Verbindung des pneumatischen Bremskreises (179) des Zugfahrzeugs mit dem Anhänger,

**gekennzeichnet durch**

d) eine Anhänger-Steuereinheit (16) mit Steuerlogik zum Steuern oder Regeln zumindest eines pneumatischen Drucks an dem Interface (180) in Abhängigkeit von der Betätigung der elektromechanischen Bremsaktuatoren (20).

2. Bremssystem (178) nach Anspruch 1, wobei die Anhänger-Steuereinheit (16) in eine Druckluftverarbeitungseinheit (12) integriert ist.

3. Bremssystem (178) nach Anspruch 1 oder 2, wobei die Anhänger-Steuereinheit (16) und/oder die Druckluftverarbeitungseinheit (12) elektrisch mit zumindest einer Brems-Steuereinheit (23; 24), welche zumindest einen der elektromechanischen Bremsaktuatoren (20) steuert oder regelt, verbunden sind/ist.

4. Bremssystem (178) nach einem der Ansprüche 1 bis 3, wobei die Anhänger-Steuereinheit (16) und/oder die Druckluftbearbeitungseinheit (12) mit zumindest einer Brems-Steuereinheit (23; 24) über einen Datenbus (30) verbunden sind/ist.

5. Bremssystem (178) nach Anspruch 4, wobei die Anhänger-Steuereinheit (16) und/oder die Druckluftverarbeitungseinheit (12) mit zumindest einer Brems-Steuereinheit (23; 24) über eine zusätzliche Kommunikationsleitung (29) verbunden sind/ist.

6. Bremssystem (178) nach einem der Ansprüche 1 bis 5, wobei ein Betriebsbrems-Steuerorgan (25) und/oder ein Parkbrems-Steuerorgan (26) über zumindest eine Brems-Steuereinheit (23; 24) mit der Anhänger-Steuereinheit (16) verbunden sind/ist und zumindest eine Brems-Steuereinheit (23; 24) geeignet konfiguriert ist zum Senden eines Signals an die Anhänger-Steuereinheit (16), welches von der Betätigung des Betriebsbrems-Steuerorgans (25) und/oder des Parkbrems-Steuerorgans (26) abhängig ist.

7. Bremssystem (178) nach einem der Ansprüche 1 bis 6 mit zumindest einem zusätzlichen pneumatischen Verbraucherkreis (14), der Druckluft für ein Luftfedersystem oder einen anderen pneumatischen Verbraucher bereitstellt.

8. Bremssystem (178) nach einem der Ansprüche 1 bis 7, wobei das Interface (180) einen elektrischen Anschluss (181) aufweist.

9. Bremssystem (178) nach einem der Ansprüche 3 bis 8, wobei redundante Brems-Steuereinheiten (23; 24) vorhanden sind.

10. Bremssystem (178) nach einem der Ansprüche 6 bis 9, wobei das Betriebsbrems-Steuerorgan (25) und/oder das Parkbrems-Steuerorgan (26) lediglich elektrische Ausgänge besitzen/besitzt.

11. Bremssystem (178) nach einem der Ansprüche 1 bis 10, wobei zumindest zwei separate elektrische Leistungsquellen (32; 33) vorhanden sind zur Bereitstellung elektrischer Energie für die elektromechanischen Bremsaktuatoren (20) und/oder die zumindest eine Brems-Steuereinheit (23; 24).

12. Bremssystem (178) nach einem der Ansprüche 1 bis 11, wobei die zumindest zwei Batterien (32; 33) durch einen Generator (34) über zumindest eine Brems-Steuereinheit (23; 24) geladen werden.

13. Bremssystem (178) nach einem der Ansprüche 1 bis 12, wobei die zumindest zwei Batterien (32; 33) durch einen Generator (34) über eine Leistungs-Steuereinheit geladen werden.

14. Bremssystem (178) nach einem der Ansprüche 1 bis 13, wobei die elektromechanischen Bremsaktuatoren (20) selbstverstärkend ausgebildet sind.

15. Bremssystem (178) nach einem der Ansprüche 1 bis 14, wobei die zumindest eine Brems-Steuereinheit (23; 24) mit einer anderen Steuereinheit verbunden ist.

16. Bremssystem (178) nach einem der Ansprüche 1 bis 15, wobei die Druckluftbearbeitungseinheit (12) und/oder die Anhänger-Steuereinheit (16) von der zumindest einen Batterie (32; 33), die elektrische Energie für die zumindest eine Brems-Steuereinheit (23; 24) bereitstellt, mit elektrischer Energie versorgt werden/wird.

**Revendications**

1. Système de freinage (178) d'un tracteur comprenant :

   a) des actionneurs de frein uniquement électromécaniques (20),
   b) un circuit de freinage pneumatique (179) pour un système de freinage pneumatique de remorque,
   c) une interface (180) pour relier pneumatiquement le circuit de freinage pneumatique (179) du tracteur à la remorque, **caractérisé par**
   d) une unité de commande de remorque (16) avec une logique de commande pour commander au moins une pression pneumatique au niveau de l'interface (180) conformément à l'actionnement des actionneurs de frein électromécaniques (20).

2. Système de freinage (178) selon la revendication 1, dans lequel l'unité de commande de remorque (16) est intégrée dans une unité de traitement de l'air (12).

3. Système de freinage (178) selon la revendication 1 ou 2, dans lequel l'unité de commande de remorque (16) et/ou l'unité de traitement de l'air (12) sont connectées électriquement à au moins une unité de commande de frein (23 ; 24) commandant au moins l'un des actionneurs de frein électromécaniques (20).

4. Système de freinage (178) selon l'une des revendications 1 à 3, dans lequel l'unité de commande de remorque (16) et/ou l'unité de traitement de l'air (12) sont connectées à au moins une unité de commande de frein (23 ; 24) par l'intermédiaire d'un bus de données (30).

5. Système de freinage (178) selon la revendication 4, dans lequel l'unité de commande de remorque (16) et/ou l'unité de traitement de l'air (12) sont connectées à au moins une unité de commande de frein (23 ; 24) par l'intermédiaire d'une ligne de communication supplémentaire (29).

6. Système de freinage (178) selon l'une des revendications 1 à 5, dans lequel des moyens de commande de frein de service (25) et/ou des moyens de commande de frein de stationnement (26) sont connectés par l'intermédiaire d'au moins une unité de commande de frein (23 ; 24) à l'unité de commande de remorque (16) et au moins une unité de commande de frein (23 ; 24) est configurée pour envoyer un signal à l'unité de commande de remorque (16) qui dépend de l'actionnement des moyens de commande de frein de service (25) et/ou des moyens de commande de frein de stationnement (26).

7. Système de freinage (178) selon l'une des revendications 1 à 6, comprenant au moins un circuit de consommateur pneumatique supplémentaire (14) fournissant de l'air sous pression à un système de suspension pneumatique ou à un autre consommateur pneumatique.

8. Système de freinage (178) selon l'une des revendications 1 à 7, dans lequel l'interface (180) comprend un port électrique (181).

9. Système de freinage (178) selon l'une des revendications 3 à 8, dans lequel des unités de commande de frein (23 ; 24) redondantes sont prévues.

10. Système de freinage (178) selon l'une des revendications 6 à 9, dans lequel les moyens de commande de frein de service (25) et/ou les moyens de commande de frein de stationnement (26) ont uniquement des sorties électriques.

11. Système de freinage (178) selon l'une des revendications 1 à 10, dans lequel au moins deux sources de puissance électrique (32 ; 33) séparées sont prévues, fournissant l'énergie électrique aux actionneurs de frein électromécaniques (20) et/ou à ladite au moins une unité de commande de frein (23 ; 24).

12. Système de freinage (178) selon l'une des revendications 1 à 11, dans lequel lesdites au moins deux batteries (32 ; 33) sont chargées par une génératrice (34) par l'intermédiaire d'au moins une unité de commande de frein (23 ; 24).

13. Système de freinage (178) selon l'une des revendications 1 à 12, dans lequel lesdites au moins deux batteries (32 ;

33) sont chargées par une génératrice (34) par l'intermédiaire d'une unité de commande de puissance.

**14.** Système de freinage (178) selon l'une des revendications 1 à 13, dans lequel les actionneurs de frein électromécaniques (20) sont à application automatique.

**15.** Système de freinage (178) selon l'une des revendications 1 à 14, dans lequel ladite au moins une unité de commande de frein (23 ; 24) est liée à une autre unité de commande.

**16.** Système de freinage (178) selon l'une des revendications 1 à 15, dans lequel l'unité de traitement de l'air (12) et/ou l'unité de commande de remorque (16) reçoivent l'énergie électrique de ladite au moins une batterie (32 ; 33) fournissant l'énergie électrique à ladite au moins une unité de commande de frein (23 ; 24).

Fig. 1

EP 2 570 314 B1

**Fig. 2**

Fig. 3

**Fig. 4**

**Fig. 5**

**Fig. 6**

**Fig. 7**

**Fig. 8**

**Fig. 9**

**Fig. 10**

EP 2 570 314 B1

**Fig. 11**

**Fig. 12**

**Fig. 13**

**Fig. 14**

**EP 2 570 314 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0973009 A2
- EP 0433362 B1
- EP 0697314 B1
- DE 19648936 B4
- DE 19739825 B4
- EP 0961722 B1
- EP 0563596 B1
- US 6139118 A
- EP 0883538 B1
- EP 1022204 A2
- DE 102008031327 A1
- DE 102008003380 A1
- EP 1925841 B1
- EP 1664571 B1
- DE 10392252 T5
- DE 112004001812 T5
- DE 112004001795 T5
- DE 112006001595 T5